# EUROPEAN PATENT SPECIFICATION

(11) **EP 2 931 849 B1**
(45) Date of publication and mention of the grant of the patent: **31.01.2018**
(21) Application number: 13862561.1
(22) Date of filing: 11.12.2013
(51) Int. Cl.: C10J 3/48, C10G 1/02, B01J 4/00, B01J 8/08, B01J 8/14, C09K 8/80, C10G 2/00

(54) **HIGH TEMPERATURE COUNTERCURRENT VORTEX REACTOR SYSTEM, METHOD AND APPARATUS**
GEGENLÄUFIGES HOCHTEMPERATUR-VORTEXREAKTORSYSTEM, VERFAHREN UND VORRICHTUNG
SYSTÈME DE RÉACTEUR À CONTRE-COURANT TOURBILLONNAIRE ET À HAUTE TEMPÉRATURE, DISPOSITIF ET PROCÉDÉ ASSOCIÉS

(30) Priority: 11.12.2012 US 201261735996 P
(43) Date of publication of application: 21.10.2015
(73) Proprietor: Foret Plasma Labs, Llc, The Woodlands, TX 77381 (US)
(72) Inventor: FORET, Todd, The Woodlands, TX 77381 (US)
(74) Representative: Müller-Boré & Partner Patentanwälte PartG mbB
(86) International application number: PCT/US2013/074506
(87) International publication number: WO 2014/093560

(56) References cited:
- EP-A1- 1 915 940
- EP-A2- 1 707 096
- CN-A- 101 905 196
- CN-U- 202 224 255
- GB-A- 1 224 638
- JP-A- 2008 238 053
- US-A- 5 843 211
- US-A1- 2003 150 325
- US-A1- 2007 253 874
- US-A1- 2010 212 498
- US-A1- 2010 258 429
- US-A1- 2011 303 532
- US-A1- 2012 097 648

## Description

### FIELD OF THE INVENTION

The present invention relates generally to the field of high temperature processing of matter with a multi-whirl cyclone reactor.

### BACKGROUND OF THE INVENTION

The United States, as well as many other countries, has an abundant source of unconventional Oil and Gas resources located in shale formations and sand formations. Hence, the terms Shale Oil, Shale Gas and Oil Sands. However, these tight shale formations require a unique completion method, referred to as hydraulically fracturing, to untrap the oil and/or gas and allow it to flow to the production tubing of the well. Likewise, Oil Sands require a unique production method termed Steam Assisted Gravity Drainage ("SAGD") to get the bitumen to flow out of the formation using steam to decrease the viscosity.

In addition, heavy oil production is increasing worldwide. The problem associated with oil sands and heavy oil is the viscosity of the bitumen and heavy oil. Consequently, one of the first processing steps is upgrading. Likewise, some producers gasify heavy oil to produce a gaseous mixture of hydrogen and carbon monoxide commonly referred to as syngas. Likewise, refineries processing heavy crude will often send the bottoms or residuals referred to as resid to a delayed coker. In all cases, whether upgrading, gasifying or coking the result leads to soot cake and coke. And coke is piling up at many oil sand upgrading facilities. Thus, there exists a need for converting coke and soot cake to higher valuable products such as calcined coke, syngas or hydrogen.

Furthermore with the depressed prices of natural gas when compared and contrasted to crude oil, many natural gas wells are capped after drilling and completing the well. Consequently, the abundant supply of a very clean burning fuel, natural gas, competes with crude oil. Thus, there exists a need for converting natural gas to a higher value product, for example, hydrogen, syngas, carbon black or a liquid fuel. When converting natural gas to a liquid fuel the process is commonly referred to as Gas To Liquids and abbreviated GTL.

The world has an abundant supply of coal. However, coal requires mining, crushing, grinding, water washing and drying prior to firing in a tangentially fired (Tee-Fired) boiler for production of steam which is used for generating electricity or for heating purposes.

In addition, the world has an abundant supply of biomass. However, processing biomass for use as a fuel is similar to coal and often requires many steps such as harvesting, transporting, shredding, grinding, drying and pelletizing. There exists an immediate need for reducing the number of steps for either burning biomass or converting it to higher value materials such as biochar and syngas, in particular syngas with a high concentration of hydrogen.

Likewise, many waste products such as food, garbage, oil and grease from restaurants is being hauled to biodiesel facilities. However, once again a low value byproduct residual remains from the conversion of oil, fats and greases to biodiesel via the transesterification process. The byproduct is glycerin. It is well known and well understood that glycerin has a high hydrogen content, thus makes an ideal feedstock for a gasifier for conversion to hydrogen.

Returning back to drilling and completing oil and gas wells as well as production wells, many wastes are produced ranging from drill cuttings to frac flowback to produced water and to flare gas. The US EPA has coined a term "Green Completion" that is actually a regulation beginning in 2015, that requires natural gas to be put to good use in lieu of flaring or wasting the natural gas. Thus, there is an absolute immediate need for a simple process for using the natural gas during the completion process.

Another industry outside of the energy industry that is in dire need of a high temperature solution is the cement industry. During the production of Portland cement Volatile Organic Compounds ("VOCs") are released when feed mill is fed into the preheater. Likewise, many cement kilns fire refuse derived fuel ("RDF"). A technology that could rapidly preheat feed mill while destroying or thermally oxidizing VOCs would help cement plants maintain current production capacities. Likewise, a technology that could flash sinter feed mill and produce a nano-clinker cement would dramatically change the cement industry.

Although many other sources of fossil fuels, biomass, RDF, and minerals could be enumerated, in order to be brief the term "matter" and "particular matter" as used herein refers top particles, ions, atoms, molecules and elements in solid, liquid, gas or plasma states.

The major issues associated with the manufacture of cement are cost, production capacity and emissions. The traditional method for treating cement uses long rotary kilns fired with coal, fuel oil, natural gas and RDF. First, the construction and installation of a new rotary kiln is expensive and requires a long lead-time (e.g., upwards of 18 to 24 months), so capacity expansion is difficult. Second, if the price of natural gas increases the production costs increase. Third, many facilities utilizing rotary kilns must install expensive scrubbers to reduce air emissions. Other issues associated with long rotary kilns are size, footprint, plant location and regulatory permits. The combination of these problems causes long lead times and thus hampers a company's ability to increase production capacity to keep up with demand of high performance cement.

In addition, treating time within a rotary kiln is exceptionally long in order to reach a typical treating temperature of 2,800°F to 3,000°F. Typical treating times range from 30 minutes to over one hour. If temperature creeps beyond the treating temperature, the lower melting point metals and/or minerals within the feed mill tend to melt and "plate" out within the kiln. Thus, the rotary kiln must be shutdown, cooled and repaired and of course adversely affects the plants production capacity.

Due to the abundance of natural gas and oil from shale plays, there exists a need for conversion of low value matter to higher value matter such as conversion of natural gas to hydrogen, conversion of coke to hydrogen, conversion of glycerin to hydrogen and conversion of biomass to various high value products such as syngas and biochar. In addition, there exists an immediate need for conversion of matter to syngas then syngas to liquid fuels hereinafter referred to as Syngas To Liquids ("STL"), whether the starting matter is derived from fossil fuels, biomass, agriculture waste, sewage and wastewater biosolids/biogas or glycerin.

Although many other sources of fossil fuels, biomass, RDF, and minerals could be enumerated, in order to be brief the term "matter" and "particular matter" as used herein refers to particles, ions, atoms, molecules and elements in solid, liquid, gas or plasma states.

Likewise, to be very concise but not all inclusive the remaining disclosure will refer to heating fluids, in particularly frac water, frac flowback, produced water in a submerged countercurrent twin vortex combustion mode for applications found within the oil and gas industry. On April 17, 2012, the U.S. Environmental Projection Agency (EPA) issued cost-effective regulation, required by the Clean Air Act, to reduce armful air pollution from the oil and natural gas industry while allowing continued, responsible growth in U.S. oil and natural gas production. The final rules include the first federal air standards for natural gas wells that are hydraulically fractured, along with requirements for several other sources of pollution in the oil and gas industry for which there are currently no federal standards. The present invention provides a means for oil and gas operators top meet the EPA's timeline with a simple system that uses the natural gas, oil and other organic within the water for heating the water. US 2011/303532 A1 discloses a system for treating a substance using a storage vessel and two or more devices disposed in a top of the storage vessel, each device comprising a volute or cyclone head.

### SUMMARY OF THE INVENTION

The present invention provides an apparatus for treating matter according to claim 1.

In addition, the present invention provides a method for treating matter according to claim 2.

The present invention is described in detail below with reference to the accompanying drawings.

### BRIEF DESCRIPTION OF THE DRAWINGS

The above and further advantages of the invention may be better understood by referring to the following description in conjunction with the accompanying drawings, in which:
FIGURE 1 is a diagram of an apparatus for treating matter in accordance with one embodiment of the present invention;
FIGURE 2 is a diagram of an apparatus for treating matter in accordance with another embodiment of the present invention;
FIGURE 3 is a diagram of an apparatus for treating matter in accordance with another yet embodiment of the present invention;
FIGURE 4 is a diagram of an apparatus for treating matter in accordance with another yet embodiment of the present invention;
FIGURE 5 is a diagram of an apparatus for treating matter in accordance with another yet embodiment of the present invention;
FIGURE 6 is a diagram of an apparatus for treating matter in accordance with another yet embodiment of the present invention;
FIGURE 7 is a diagram of an apparatus for treating matter in accordance with another yet embodiment of the present invention;
FIGURE 8 is a diagram of an apparatus for treating matter in accordance with another yet embodiment of the present invention.
FIGURE 9 is a diagram of an apparatus for sintering proppants in accordance with another yet embodiment of the present invention;
FIGURE 10 is a diagram of an apparatus for sintering proppants in accordance with another yet embodiment of the present invention; and
FIGURE 11 is a diagram of an apparatus for sintering proppants in accordance with another yet embodiment of the present invention; and
FIGURE 12 is a flow chart of a method for treating matter in accordance with one embodiment of the present invention;
FIGURE 13 is a diagram of an apparatus for treating matter in accordance with another yet embodiment of the present invention;
FIGURE 14 is a diagram of an apparatus for treating matter in accordance with another yet embodiment of the present invention;
FIGURE 15 is a diagram of an apparatus for treating matter in accordance with another yet embodiment of the present invention;
FIGURE 16 is a diagram of an apparatus for treating matter in accordance with another yet embodiment of the present invention; and
FIGURE 17 is a process flow diagram of a system for treating matter in accordance with another yet embodiment of the present invention;

### DETAILED DESCRIPTION OF THE INVENTION

While the making and using of various embodiments of the present invention are discussed in detail below, it should be appreciated that the present invention provides many applicable inventive concepts that can be embodied in a wide variety of specific contexts. The specific embodiments discussed herein are merely illustrative of specific ways to make and use the invention and do not delimit the scope of the invention. The discussion herein relates primarily to heating fluids within the Oil and Gas Industry, but it will be understood that the concepts of the present invention are applicable to the manufacture or processing of particles at high temperatures.

The present invention relates to a high temperature twin whirl cyclone reactor system, method and apparatus that can be operated in one or more modes selected from the following group; plasma arc cracker, arc pyrolysis reactor, gasifier, rapid arc furnace, flash treating reactor, steam plasma reformer, plasma thermal oxidizer, vortex burner, submerged combustor, atomic oxygen and ozone generator, fast quench reactor, Fischer-Tropsch Reactor, high temperature atomizer, high temperature communition reactor, steam super heater and separator, or as a lean or rich multi-whirl burner/combustor. Very specifically, the present invention relates to a high temperature twin whirl cyclone reactor for generating hydrogen from matter containing carbon. Likewise, the present invention relates to a high temperature twin whirl cyclone catalytic reactor for converting syngas to liquids commonly referred to as gas to liquids ("GTL"). In addition, the present invention relates to a Quad Whirl Cyclone Reactor for treating matter, in particular converting matter to hydrogen and/or higher value products. Furthermore, the present invention relates to a high temperature multi-cyclone reactor for pretreating cement kiln feed mill and flash treating cement. Very specifically, the present invention relates to a system, method and apparatus for heating water for fracturing oil and gas wells and for heating frac flowback water for green completion of hydraulically fractured oil and gas wells and for heating water and steam for enhanced oil recovery ("EOR") using a high temperature countercurrent vortex reactor.

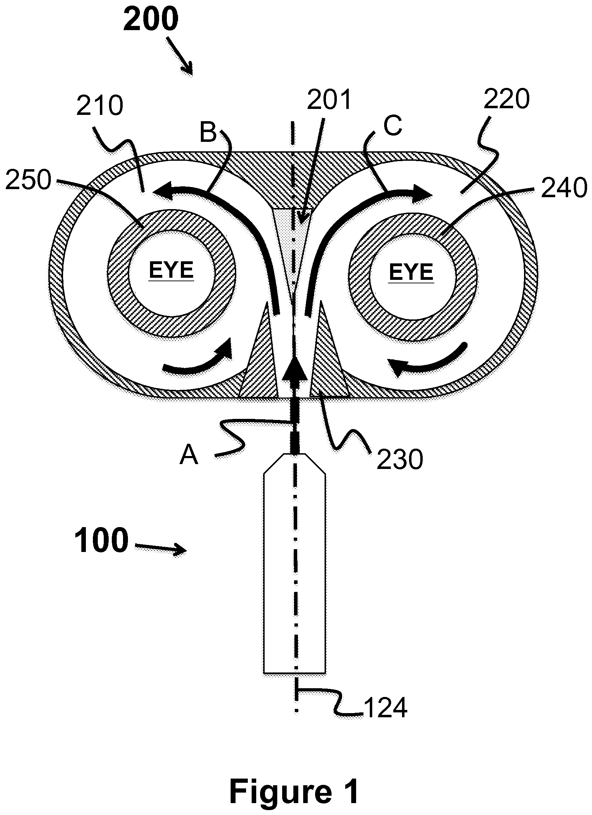

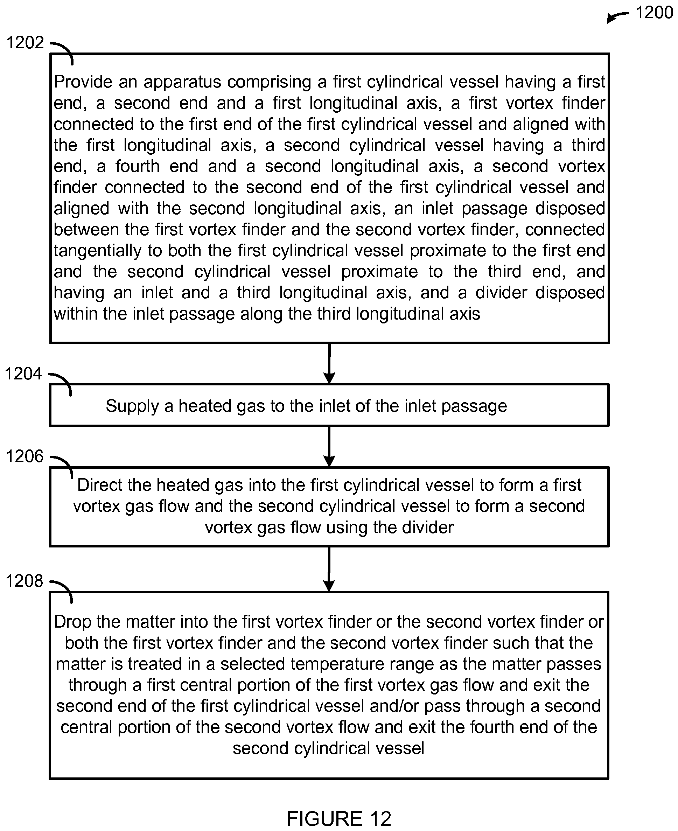

FIGURES 1-12 show various embodiments of an apparatus for treating matter in accordance with the present invention. Note that the terms matter and material are used interchangeably throughout the description. Moreover the matter or material may include green pellets such that the present invention sinters the green pellets to make proppant particles. The basic apparatus in accordance with these embodiments includes: (a) a first cylindrical vessel having a first end, a second end and a first longitudinal axis; (b) a first vortex finder connected to the first end of the first cylindrical vessel and aligned with the first longitudinal axis; (c) a second cylindrical vessel having a third end, a fourth end and a second longitudinal axis; (d) a second vortex finder connected to the third end of the second cylindrical vessel and aligned with the second longitudinal axis; (e) an inlet passage disposed between the first vortex finder and the second vortex finder, connected tangentially to both the first cylindrical vessel proximate to the first end and the second cylindrical vessel proximate to the third end, and having an inlet and a third longitudinal axis; (f) a wedge or divider disposed within the inlet passage along the third longitudinal axis that directs a heated gas from the inlet into the first cylindrical vessel to form a first vortex gas flow and the second cylindrical vessel to form a second vortex gas flow; (g) a heater or heated gas source connected to the inlet of the inlet passage; and (h) a matter source connected to the first vortex finder or the second vortex finder or both the first vortex finder and the second vortex finder such that the matter drops into the first vortex finder or the second vortex finder or both the first vortex finder and the second vortex finder and is treated or partially treated in a selected temperature range to form inert particles as the matter passes through a first central portion of the first vortex gas flow and exit the second end of the first cylindrical vessel and/or pass through a second central portion of the second vortex flow and exit the fourth end of the second cylindrical vessel.

As will be explained in more detail below, a material can be added to the first vortex gas flow or the second vortex gas flow that coats or chemically reacts with the matter. Moreover, the matter can be partially treated in the first cylindrical vessel and fully fired or treated in the second cylindrical vessel. The selected temperature range is between about 1,200°C and 3,700°C. In addition, the selected temperature range is typically based on a chemical composition of the matter, particle size of the matter, a resonance time of the matter within the first cylindrical vessel, the second cylindrical vessel or both. Note that other parameters may also be used to determine the selected temperature range.

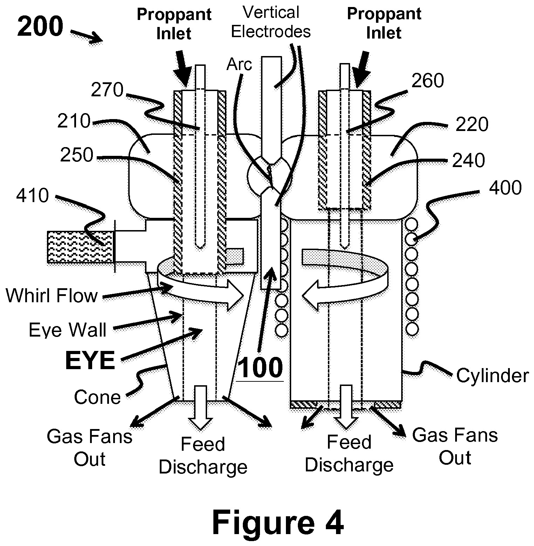

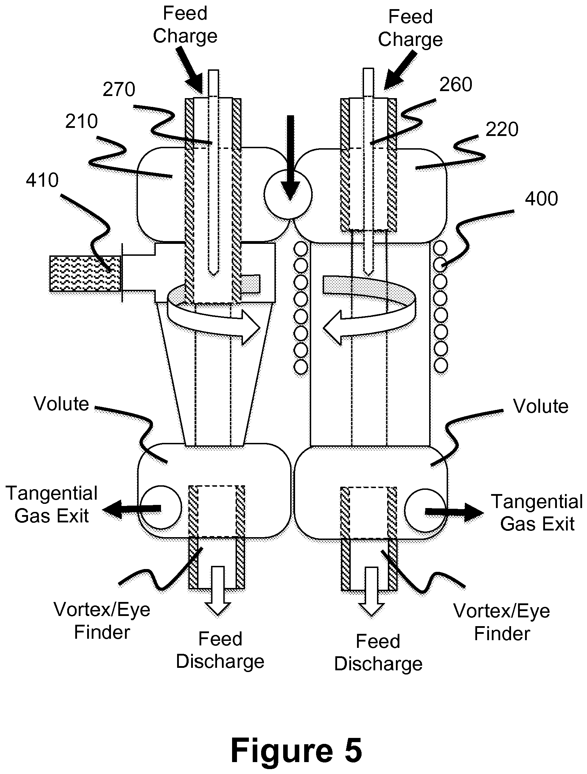

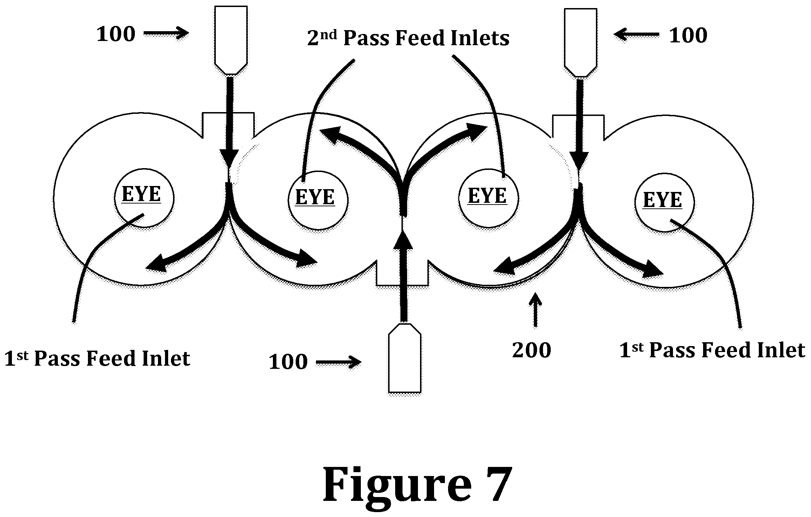

The wedge or divider can be fixed, pivotable such that first vortex gas flow is different from the second vortex gas flow, and/or moveable along the third longitudinal axis. Moreover, the wedge or divider can be an electrode or a counter current feed tube containing a material that coats or chemically reacts with the matter (FIGURE 7). As shown in FIGURES 4 and 5, the first cylindrical vessel and the second cylindrical vessel can be cylinder-shaped or cone-shaped. Note that both cylindrical vessels can be the same shape.

Now referring to FIGURE 1, a heater or heated gas source 100 is attached along a longitudinal axis 124 to a twin volute cyclone 200. The twin volute cyclone 200 consists of an entry nozzle 230 to direct a hot gas A from the heater or heated gas source 100 into the twin volute cyclone 200 and is divided by means of a wedge or divider 201. The wedge or divider 201 divides the hot gas A into a first volute annulus space 210 and its mirror image second volute annulus space 220. The wedge or divider 201 may be attached to a pivot, thus allowing for the wedge or divider to act as a gate valve for directing more or less gas into either side of the twin volutes. The gas rotates in the first volute annulus space 210 as shown by arrow B and the second volute annulus space as shown by arrow C. Each volute contains a vortex finder 240 and 250 that forms an EYE within each vortex finder 240 and 250.

Matter that is hard and needs to be crushed, shredded and/or comminuted can be fed into and near hot gas A. On the other hand, the EYE moves at a very low speed and is, therefore, an ideal Feed Point for delicate materials that do not need to be comminuted by just need to be heated to a firing temperature. This allows for rapid treating of either hard of delicate matter (i.e., seconds as opposed to 30 minutes or more in long rotary kilns).

The heater or heated gas source 100 may be selected but is not limited to a group that includes a high temperature blower or compressor, electrical heater or heated gas source, burner, thermal oxidizer, gasifier, reformer, jet rocket, oxy-fuel torch, plasma torch and/or even the exhaust from an internal combustion engine such as a reciprocating engine or gas turbine engine. The utilization of engine exhaust allows for generating electricity while treating matter. Hence, a unique cogenerating system - generating electricity while treating matter. In another example, the heater or heated gas source includes a first electrode proximate to inlet of the inlet passageway and aligned with the third longitudinal axis, and the wedge or divider is a second electrode.

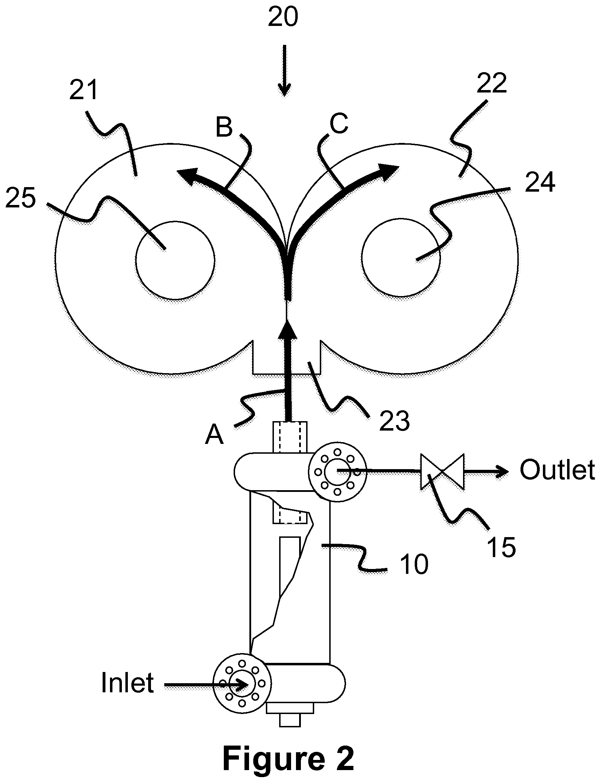

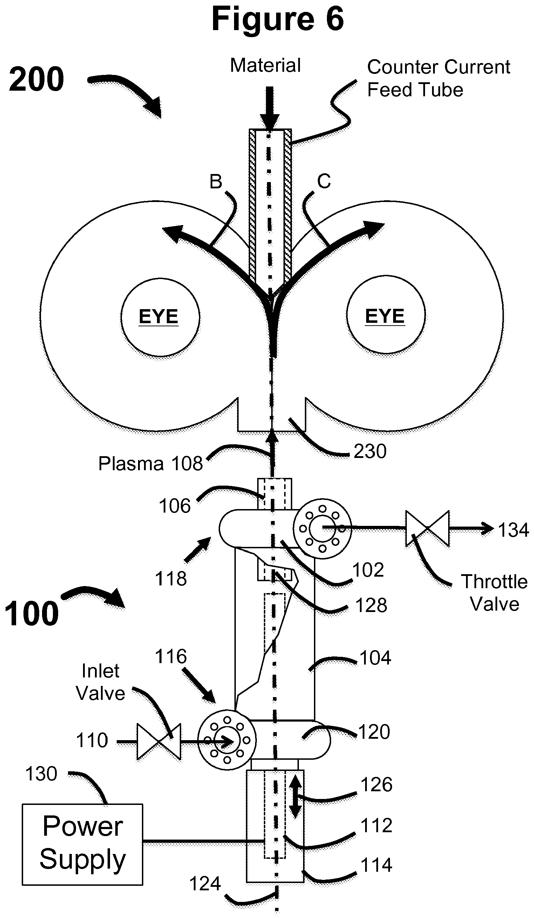

Turning now FIGURE 2, the heater or heated gas source 100 can be the DC Plasma ArcWhirl® Torch disclosed in US Patent Numbers 8,074,439 and 8,278,810 and 7,622,693 and 8,324,523. Likewise, an ideal heater or heated gas source may be the thermal oxidizer shown in Figure 6 of the '439 patent or the plasma rocket as disclosed in Figure 7 of the '439 patent.

The heater or heated gas source includes: (a) a third cylindrical vessel having a fifth end, a sixth end and a fourth longitudinal axis; (b) a tangential inlet connected to or proximate to the fifth end; (c) a tangential outlet connected to or proximate to the sixth end; (d) an electrode housing connected to the sixth end of the third cylindrical vessel such that a first electrode is aligned with the fourth longitudinal axis of the third cylindrical vessel, extends into the third cylindrical vessel, and can be moved along the fourth longitudinal axis; (e) a linear actuator connected to the first electrode to adjust a position of the first electrode within the third cylindrical vessel along the fourth longitudinal axis of the cylindrical vessel; and (f) a hollow electrode nozzle connected to the sixth end of the third cylindrical vessel such that a center line of the hollow electrode nozzle is aligned with the fourth longitudinal axis of the fourth cylindrical vessel. The tangential inlet and the tangential outlet create a third vortex flow within the third cylindrical vessel, and the first electrode and the hollow electrode nozzle create a plasma that discharges through the hollow electrode nozzle and into the inlet of the inlet passageway.

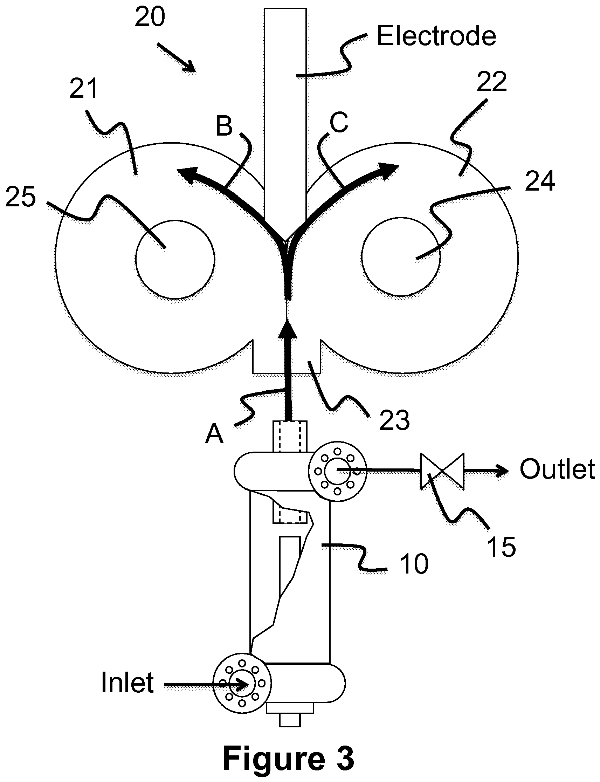

Referring to both FIGURE 1 and FIGURE 3 of the present invention an Electrode may be used as the wedge or divider 201 in order to transfer the arc from the DC Plasma ArcWhirl® torch 100. Likewise, continually feeding the electrode allows for continuous operation. In addition, by using graphite electrodes this adds fuel to the fire but more importantly allows for production of hydrogen via the steam reforming reaction of steam and carbon. It will be understood that any electrically conductive material may be used for the electrode. For example, copper is an ideal electrode for plasma systems since it has a high electrical conductivity as well as thermal conductivity. Consequently, by cooling the copper electrode this allows for extended operation.

The present invention can also use an electrode material that can be coated unto the matter. For example, titanium is a lightweight electrically conductive metal that is available in rods, bars or tubes which can be fed continuously for coating the matter with a high strength lightweight metal. On the otherhand, tungsten is a heavy electrically conductive metal that may be used to coat matter.

Turning now to FIGURE 1 and FIGURE 4, the present invention will be described in another embodiment. FIGURE 4 discloses a twin volute with one volute attached to a cone and the other attached to a cylinder. It will be understood that the volutes may be attached to cones or to cylinders or any other shape for practicing the present invention. The cone and cylinder attached to the twin volute is for illustrative purposes only and is not limited in scope to the present invention.

Likewise, the twin volute plasma torch is a dual inductively coupled plasma torch utilizing radio frequency in the range of 0.5 kHz to 300 MHz. A microwave source 410 and/or an induction coil 400 may be attached to or disposed within either the cone or cylinder in order to couple to the plasma generated by the plasma arc heater or heated gas source 100. The vertical configuration allows for a simple carbon arc electrode configuration 100 disposed in a vertical fashion. For example, the first electrode is proximate to the inlet of the inlet passageway and aligned in a plane substantially perpendicular to the third longitudinal axis, and the third electrode is aligned longitudinally with the first electrode such that an electrical arc between the first and second electrodes intersects the third longitudinal axis. This allows for continuously feeding both carbon electrodes.

The carbon plasma arc may provide the excitation energy for either the microwaves or RF energy to couple to and form a global plasma within the EYE. However, susceptors 270 and 260 may be located within the vortex finders 250 and 240 in order to ignite the plasma and allow for coupling and sustaining the plasma. Likewise, the inductively coupled plasma is sustained within the EYE.

In order to treat matter that is fragile, the matter is charged into the vortex finders 250 and 240 and into the EYE of the plasma whirl®. This prevents the matter from being disintegrated due to the high velocity of the Whirl Flow outside of the EYE. The matter drops down the vertical axis of the EYE and through the inductively coupled plasma and are discharged through the bottom of each volutes apex that may be attached to either the cone or cylinder. The whirling mass of gas will fan out of the apex or underflow.

Plasma can couple to Radio Frequency Energy (e.g., inductively coupled ("IC") plasma torches, etc.). The present inventor's Plasma Whirl® Reactor is an IC Plasma Torch. The Radio Frequency ("RF") Spectrum ranges from about 3 kHz to 300 GHz. Induction heating commonly employs RF coils ranging in frequency from 0.5 kHz to 400 kHz. Likewise, microwave frequencies commonly found in household microwave ovens normally operate at 2,450 Mega Hertz (2.450 GigaHertz) and at a power of 300 watts to 1,000 watts. Commercial microwave ovens ranging in power from 6 kw to 100 kw typically operate at a frequency of 915 MHz (Mega Hertz).

As previously stated RF energy can couple to a gas and form plasma. Coupling efficiency is based upon several variables ranging from the gas type, gas flow rate, frequency, cavity and/or reactor shape and volume. Note that the radio frequency source can be one or more radio frequency coils, a waveguide, or a combination thereof.

The three major issues with plasma are igniting, sustaining and confining the plasma. Igniting and sustaining plasma with an electrical arc is fairly straightforward and simple. DC plasma torches utilize inertial confinement to maximize and transfer energy to the work piece. Likewise, plasma confinement is necessary to prevent melting of the torch itself.

However, plasma ignition with RF energy is quite difficult. Consequently, many RF torches using an RF coil or a Microwave source typically employ a susceptor to ignite the plasma. The susceptor is simply a pointed metal rod that will absorb the RF energy, heat up and then emit an electron via thermionic emission. As a result, the spark ignites any gases present and forms the plasma.

Turning back to FIGURE 4, a susceptor 270 and 260 may be employed within each vortex finder 250 and 240 in order to ignite the plasma. However, utilizing a DC plasma torch as the heater or heated gas source 100 allows for increasing the bulk plasma volume by simply turning on the RF coil or Microwave generator and injecting WAVE ENERGY in the form of photons emitted from the RF coil or the Microwave magnetron to enhance the plasma.

Turning now to FIGURE 5, a second volute may be attached to the cylinder and/or cone of the top volutes. Although the bottom volutes each disclose a tangential exit, it will be understood that a twin volute may be flipped upside down and used on the bottom thus having a single exit. This configuration is commonly referred to as a through-flow hydrocyclone. Thus, the feed charge tubes are axially and vertically aligned with the vortex/eye finder of the bottom volutes. This allows for green matter to fall straight through the high temperature inductively coupled plasma eye and exit the feed discharge as fully treated matter.

For example, a third vortex finder can be connected to the second end of the first cylindrical vessel and aligned with the first longitudinal axis, and a first tangential outlet connected to or disposed proximate to the second end of the first cylindrical vessel such that the first vortex gas flow exits the first cylindrical vessel through the first tangential outlet. Likewise, a fourth vortex finder can be connected to the fourth end of the second cylindrical vessel and aligned with the second longitudinal axis, and a second tangential outlet connected to or disposed proximate to the fourth end of the second cylindrical vessel such that the second vortex gas flow exits the second cylindrical vessel through the second tangential outlet. Alternatively, the two tangential outlets can be combined into an outlet passage disposed between the first vortex finder and the second vortex finder, connected tangentially to both the first cylindrical vessel proximate to second first end and the second cylindrical vessel proximate to the fourth end, and having an outlet.

Turning now to FIGURE 6 a counter current feed tube is aligned along the longitudinal axis 124 with the Plasma ArcWhirl® Torch 100. Plasma spraying and coating of materials is well known and well understood. A material may be fed into the counter current feed tube in order to coat the matter and/or chemically react with the matter. For example, titanium or titanium dioxide may be fed in order to coat the matter with a nano-coating of titanium. Although not shown, material may be conveyed into the counter current feed tube via a pump, screw feeder, auger, progressive cavity pump, pneumatic conveyor or any other conveyance means known in the art for moving solids, liquids and gases. An ideal conveyance means for recovering fluids coating matter, for example recovering drilling fluids from drill cuttings is utilizing a screw press, then pulling a vacuum on the screen in order to induce some of the plasma into the feed tube, while still moving the solids into the plasma. This configuration would allow for counter current heating of the solids to remove valuable drilling fluids. Likewise, this configuration allows for preheating material prior to entry into the bulk plasma. Petroleum coke, soot cake from gasifiers and coal are ideal examples of wet material that may be preheated prior to injection into the plasma through the counter current feed tube.

Although previously disclosed in the present inventor's patents, the ArcWhirl® Torch 100 will be briefly described to demonstrate the novelty and unobvious operation of attaching it to a twin volute 200. Referring to FIGURE 7, a plasma arc torch 100 in accordance with one embodiment of the present invention is shown. The plasma arc torch 100 is a modified version of the ARCWHIRL® device disclosed in U.S. Patent Number 7,422,695 that produces unexpected results.

More specifically, by attaching a discharge volute 102 to the bottom of the vessel 104, closing off the vortex finder, replacing the bottom electrode with a hollow electrode nozzle 106, an electrical arc can be maintained while discharging plasma 108 through the hollow electrode nozzle 106 regardless of how much gas (e.g., air, nitrogen, helium, hydrogen), fluid (e.g., water) or steam 110 is injected into plasma arc torch 100. In addition, when a throttle valve is connected to the discharge volute 102, the mass flow of plasma 108 discharged from the hollow electrode nozzle 106 can be controlled by throttling the throttle valve while adjusting the position of the first electrode 112 using the linear actuator 114.

As a result, plasma arc torch 100 includes a cylindrical vessel 104 having a first end 116 and a second end 118. A tangential inlet 120 is connected to or proximate to the first end 116 and a tangential outlet 102 (discharge volute) is connected to or proximate to the second end 118. An electrode housing 122 is connected to the first end 116 of the cylindrical vessel 104 such that a first electrode 112 is aligned with the longitudinal axis 124 of the cylindrical vessel 104, extends into the cylindrical vessel 104, and can be moved along the longitudinal axis 124. Moreover, a linear actuator 114 is connected to the first electrode 112 to adjust the position of the first electrode 112 within the cylindrical vessel 104 along the longitudinal axis of the cylindrical vessel 124 as indicated by arrows 126. The hollow electrode nozzle 106 is connected to the second end 118 of the cylindrical vessel 104 such that the centerline of the hollow electrode nozzle 106 is aligned with the longitudinal axis 124 of the cylindrical vessel 104. The shape of the hollow portion 128 of the hollow electrode nozzle 106 can be cylindrical or conical. Moreover, the hollow electrode nozzle 106 can extend to the second end 118 of the cylindrical vessel 104 or extend into the cylindrical vessel 104 as shown. As shown in FIGURE 7, the tangential inlet 120 is a volute attached to the first end 116 of the cylindrical vessel 104, the tangential outlet 102 is a volute attached to the second end 118 of the cylindrical vessel 104, the electrode housing 122 is connected to the inlet volute 120, and the hollow electrode nozzle 106 (cylindrical configuration) is connected to the discharge volute 102. Note that the plasma arc torch 100 is not shown to scale.

A power supply 130 is electrically connected to the plasma arc torch 100 such that the first electrode 112 serves as the cathode and the hollow electrode nozzle 106 serves as the anode. The voltage, power and type of the power supply 130 is dependent upon the size, configuration and function of the plasma arc torch 100. A gas (e.g., air), fluid (e.g., water) or steam 110 is introduced into the tangential inlet 120 to form a vortex 132 within the cylindrical vessel 104 and exit through the tangential outlet 102 as discharge 134. The vortex 132 confines the plasma 108 within in the vessel 104 by the inertia (inertial confinement as opposed to magnetic confinement) caused by the angular momentum of the vortex, whirling, cyclonic or swirling flow of the gas (e.g., air), fluid (e.g., water) or steam 110 around the interior of the cylindrical vessel 104. During startup, the linear actuator 114 moves the first electrode 112 into contact with the hollow electrode nozzle 106 and then draws the first electrode 112 back to create an electrical arc which forms the plasma 108 that is discharged through the hollow electrode nozzle 106. During operation, the linear actuator 114 can adjust the position of the first electrode 112 to change the plasma 108 discharge or account for extended use of the first electrode 112.

Referring to FIGURES 1, 3 and 6 jointly, what is unique and unobvious to the present invention is that the arc may be blown out of the nozzle 106 and attached to the twin volute's 200 nozzle 230. Likewise, the arc may be farther transferred along the longitudinal axis 124 and attached and centered to the electrically conductive wedge or divider 201 or the electrode as shown in FIGURE 3. This configuration allows for continuous use. Furthermore, the countercurrent feed tube of FIGURE 6 may be electrically conductive. Likewise, although not shown a wire, stinger or electrode may be fed down the center of the countercurrent feed tube.

In previous testing of the countercurrent feed configuration carbonaceous matter was fully converted to char and then to syngas when the ArcWhirl® Torch 100 used steam as the plasma gas. Consequently, this configuration allows for the production of syngas while treating matter. This **GREEN** approach for treating matter allows for the production of a fuel during the treating method.

Not being bound by theory, matter that may contain alumina and iron, together form a very common catalyst used for making liquid fuels from gases. This process and catalyst is referred to as Fischer Tropschs and is commonly referred to as Gas To Liquids ("GTL") when the starting fossil fuel is natural gas. Thus, in lieu of burning natural gas in a large rotary furnace, the present invention opens the door for a unique GTL process while treating matter. The FT reaction is an exothermic reaction. Consequently, this will aid in rapid treating of the matter and will help reduce the electrical load due to the plasma torch 100.

Turning now to FIGURE 7 while referring to FIGURE 1, the present invention twin volute plasma system may be configured similar to a chain. This configuration allows for three torches 100 to provide dual entries into two volutes. Thus, this stabilizes the EYE of the two center volutes. In addition, this allows for multiple passes of the proppants, for example a first pass and second pass, thus reducing the overall size and height of the system.

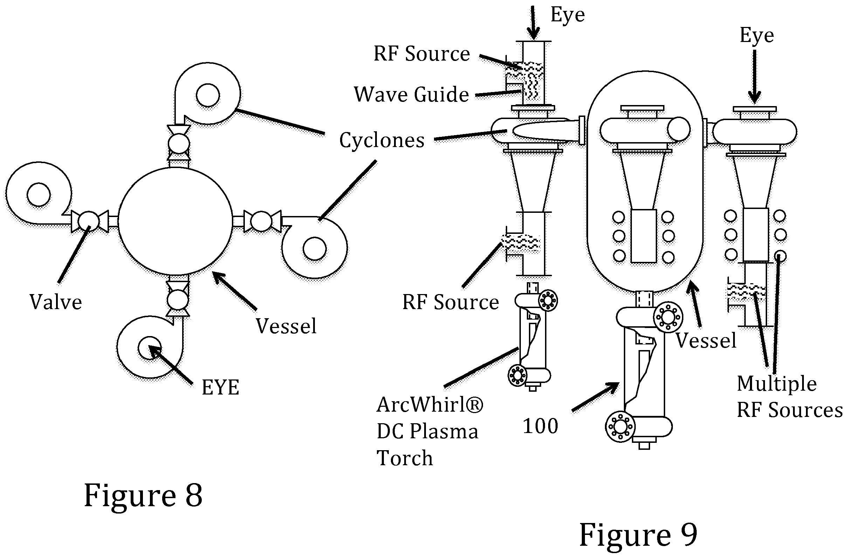

Turning now to FIGURES 8 and 9, a different approach is used to achieve the same goal - treating material with multiple cyclones attached to a single gas vessel. The gas vessel allows for feeding multiple cyclones. Once again, the heater or heated gas source is an ArcWhirl Torch 100 that discharges its plasma into the vessel. Consequently, the plasma discharges into each cyclone. Each cyclone has attached to it the microwave or RF source. And of course material is fed into the EYE of the whirling plasma of each volute. Although not shown, it will be understood that each cyclone may be a twin volute cyclone which would be keeping in the various embodiments of the present invention.

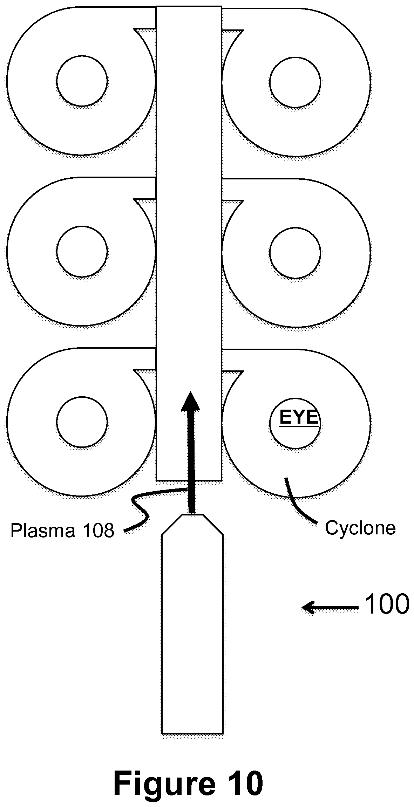

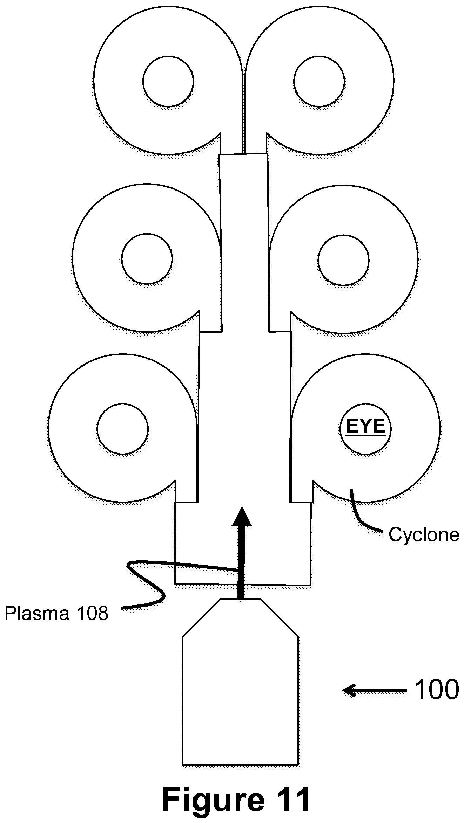

Turning now to FIGURES 10 and 11 the ArcWhirl Torch 100 may be attached to a header or conduit that feeds multiple Plasma Volutes. Although not shown the volutes may be twin volutes. Once again proppants are fed directly into the EYE of the Plasma Whirl®.

As illustrated by FIGURES 1-12 and the foregoing description, the present invention provides a method 1200 for treating matter. A basic apparatus is provided in block 1202 that includes: (a) a first cylindrical vessel having a first end, a second end and a first longitudinal axis; (b) a first vortex finder connected to the first end of the first cylindrical vessel and aligned with the first longitudinal axis; (c) a second cylindrical vessel having a third end, a fourth end and a second longitudinal axis; (d) a second vortex finder connected to the third end of the second cylindrical vessel and aligned with the second longitudinal axis; (e) an inlet passage disposed between the first vortex finder and the second vortex finder, connected tangentially to both the first cylindrical vessel proximate to the first end and the second cylindrical vessel proximate to the third end, and having an inlet and a third longitudinal axis; and (f) a wedge or divider disposed within the inlet passage along the third longitudinal axis. A heated gas is supplied to the inlet of the inlet passage in block 1204, and the heated gas is directed into the first cylindrical vessel to form a first vortex gas flow and the second cylindrical vessel to form a second vortex gas flow using the wedge or divider in block 1206. The matter is dropped into the first vortex finder or the second vortex finder or both the first vortex finder and the second vortex finder in block 1208 such that the matter is treated in a selected temperature range as the matter passes through a first central portion of the first vortex gas flow and exit the second end of the first cylindrical vessel and/or pass through a second central portion of the second vortex flow and exit the fourth end of the second cylindrical vessel.

The present invention's use of multiple small diameter cyclones fed from a common header provides for a compact proppant manufacturing plant or system that is efficient and scalable. Likewise, this configuration enables the plant to increase production capacity via small increments and not through the purchase of one long rotary kiln or one large plasma process. The present invention allows the proppants to be manufactured in a multi-stage sintering process wherein addition materials can be added to, coated or reacted with the proppants to produce new and improved characteristics. Moreover, the ability to use off-the-shelf and/or modified high temperature and high pressure cyclones sourced from the oil and gas industry as a component for a plasma proppant manufacturing system allows for a relatively compact, modular and inexpensive plant that could be built in a timely fashion. Finally, the present invention provides a system that can be mounted on a skid and operated at or near the drilling operation which greatly reduces the cost of the proppants by saving expensive storage and transportation costs.

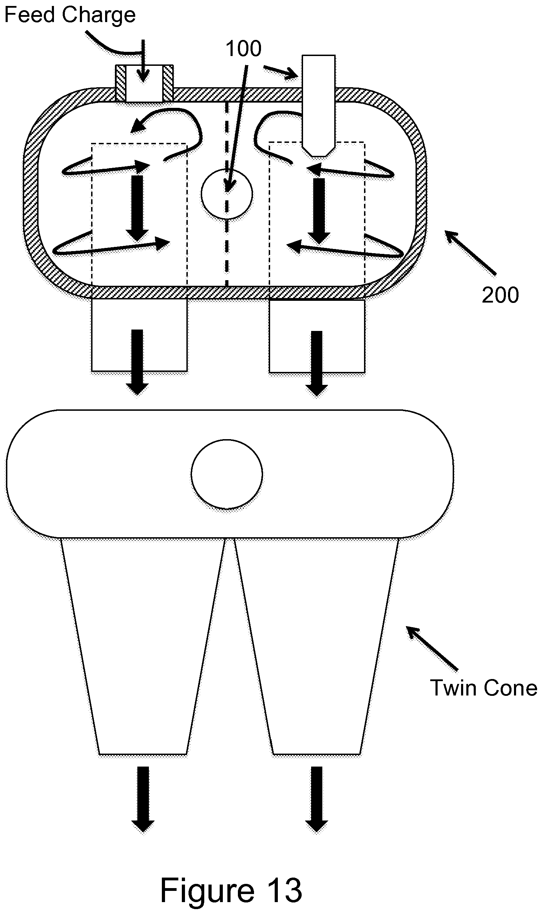

Turning now to FIGURE 13 while referring to FIGURE 1, the present invention twin volute plasma system may be configured to be placed on top (shown) or bottom (not shown) of a twin volute cyclone. This configuration allows for using the twin cone to quench any reactions formed during the treating of matter. Likewise, this configuration also allows for using the twin cone as a combustor, thus thermally oxidizing any gases formed during the treating matter step.

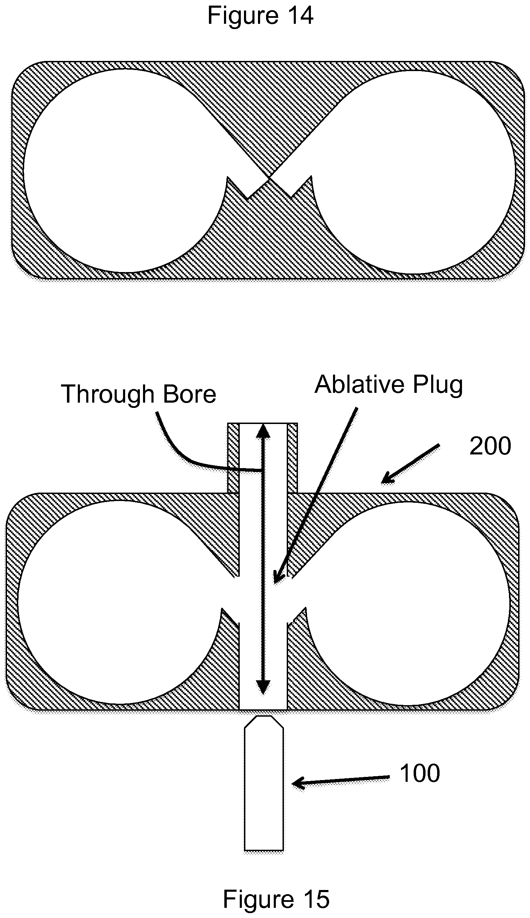

Turning now to FIGURE 14, the Twin Whirl Apparatus may be constructed by placing off the shelf cyclone separators within a housing and then using a card board cyclinder to form a **through bore** as shown in FIGURE 15. As previously disclosed this allows for feeding material counter current to the plasma. During testing of the present inventor's 4 torch PlasmaWhirl® Reactor, a QUIK-TUBE™ rigid fiber building form was used to form the hole or cavity within cyclone. Next, the form was removed by simply igniting a plasma torch. What happened next led to completely unexpected results. The QUIK-TUBE™ rigid fiber building form became an ablative liner. Although the plasma torch was aimed tangentially to an invisible EYE, the plasma did not affect the alumina ceramic because, it was protected by the form. Hence, the form acted as an ablative liner. Consequently, by feeding material counter current to the plasma, then the material becomes an ablative plug, thus protecting the twin ceramic cyclones.

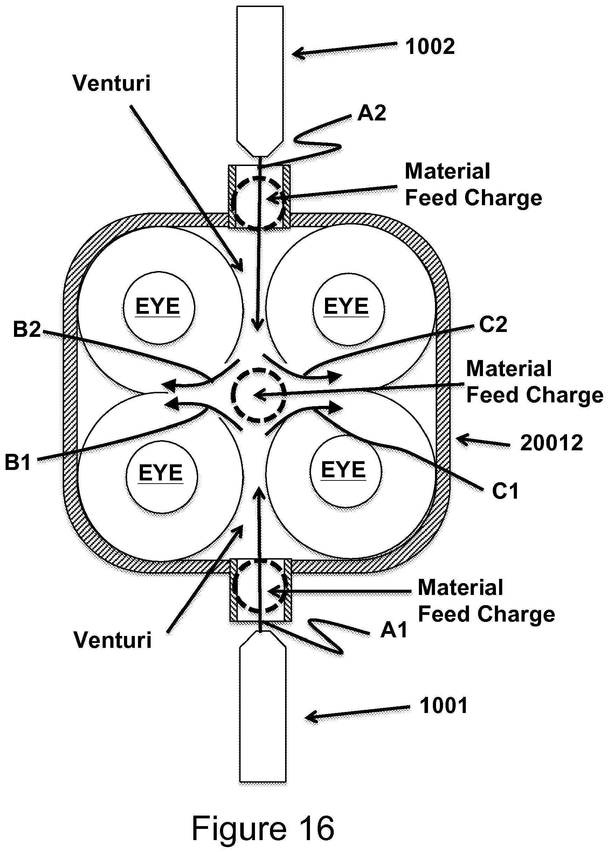

FIGURE 16 is another embodiment of the present invention. The following example will held explain the novely and unobviousness of the present invention of FIGURE 16. If four gears are placed touching one another similar to the four cyclones, then this configuration is known as locked train. If one gear is rotated then the opposing gear will rotate in the opposite direction. For example, the hot gas A1 discharging from hot gas generator 1001 will flow in the direction as shown by arrows B1 and C1. On the other hand, the opposing cyclones will flow the hot gas A2 from hot gas generator 1002 as shown by arrows B2 and C2. A venturi will be formed by each of the cyclones, thus this gives rise to another novel and unobvious mode of operation. A material feed charge hole may be placed by the exit of plasma torch 1001 and plasma torch 1002. Thus, this allows for particle to particle collision of matter due to the high velocity of the plasma jet, consequently allowing for rapid treatment of the matter. On the other hand, material may be fed directly between the two opposing torches 1001 and 1002 that would be the center of device 20012. Once again, this would form an ablative plug between plasma torches 2001 and 2002, thus protecting the torches. It will be understood that either plasma torch 1001 or 1002 may be a countercurrent feed tube in lieu of a hot gas generator.

As illustrated by FIGURE 16 a system, method and apparatus is shown for treating matter with the present invention. The system and method includes but is not limited to a material hopper with a rotary auger valve motor. The rotary auger valve motor may be controlled with a variable frequency drive ("VFD") thus allowing for precise feeding to the TEE. The hot gas generator 100 fires its hot gas into the Multiple Cyclone Plasma Whirl® Reactor while educting the material into its high velocity hot gas stream. The hot gases and matter rise inside the twin volute cyclone 200 or quad volute cyclone 20012. The matter and hot gases are discharged from the twin volute cyclone 200 or quad volute cyclone 20012 and into a combined gas water treatment unit selected from the group consisting of an induced gas flotation cell ("IGF"), dissolved air flotation ("DAF") unit, Jameson Cell, froth flotation cell, venturi scrubber or any means for coupling gas scrubbing and water treating within one unit.

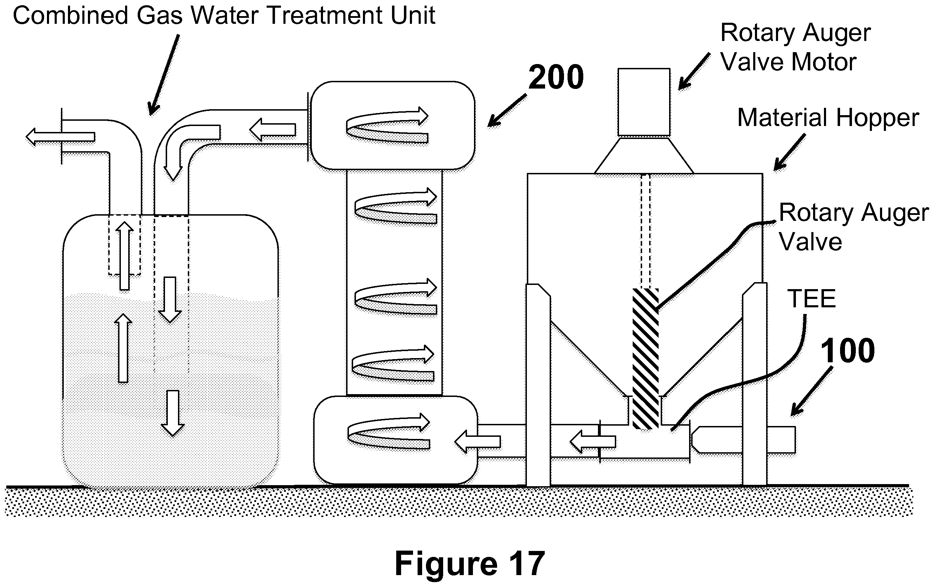

The following examples will demonstrate the novelty and unobviousness of the present invention when applied to real world problems. As previously stated as the world runs out of easy oil and gas, more oil and gas companies are going after unconventional oil and gas resources. Consequently, heavy oil must be upgraded or gasified which in turn produces petroleum coke and filter soot cake. Although many refineries view these streams as waste byproducts in particularly petcoke from oil sands upgraders, the pet coke can be utilized as a unique catalyst in the present invention. Referring to FIGURE 6 of the present inventor's US Patent #8,568,663 titled "Solid Oxide High Temperature Electrolysis Glow Discharge Cell and Plasma System," that issued on October 29, 2013 the cyclone separator 610 would be the twin volute cyclone of FIGURE 17 of the present invention. Likewise, torch 100 of the '663 patent would be torch 100 of FIGURE 17 of the present invention. Thus, utilizing steam plasma allows for rapid conversion of petcoke to syngas consisting of hydrogen and carbon monoxide. The syngas is then scrubbed in the combined gas and water treatment unit.

Two additional streams found within the upstream oil and gas industry that present major problems are drill cuttings and frac flowback. The US EPA has regulated flare gas from frac flowback and effective January 1, 2015, operators must beneficially use the natural gas within the frac flowback. The present invention allows for treating both frac flowback and drill cuttings simultaneously. Referring to FIGURE 17 drill cuttings would be the solid material fed from the hopper into the plasma torch 100 via the Tee. The drill cuttings would be partially melted on the fly then discharged into the center or eye of a venture scrubber in which the scrubbing media would be the frac flowback. Additional air would be added into the frac flowback. The extremely red hot drill cutting particles would act as the ignition source for combusting the natural gas and air. The mixture of combustion gases and quenched sintered drill cuttings would then flow to a frac tank. A vacuum would be pulled on the frac tank and the exhaust of noncondensible gases and water vapor would be vapor compressed and used to preheat the incoming frac flowback. Thus, this would produce distilled water for use as frac water in the next well to be drilled by the operator.

An additional benefit would be the volume reduction by melting the drill cuttings. The inventor of the present invention has demonstrated a 90% volume reduction when melting shale drill cuttings. Consequently, this allows for a dramatic reduction in hauling and disposal costs, especially when cuttings are injected downhole into a disposal well.

If the operator desires to recover base fluid, then a screw press may be used to flow drill cuttings counter current to the plasma. This allows for recovering base fluid while melting drill cuttings.

Another industry that has been recently regulated is the cement industry. When raw feed meal is preheated volatile organic compounds ("VOCs") within the raw meal vaporize and then are discharged into the atmosphere. Beginning in 2015, the US EPA will regulate the discharge of emissions, in particular VOCs from cement production facilities. Returning to FIGURE 16, raw meal may be fed to any of the material feed charge ports and preheated with an oxygen or air plasma. The foregoing description of the present invention provides a method for treating matter. The high temperatures will destroy or combust the VOCs. Since the VOCs are at a low limit, then an air plasma with a low volume of air may be sufficient to fully thermally oxidize the organics.

Another industry that is in dire need of a solution is the renewable energy industry in particularly the biodiesel industry. During the production of biodiesel via transesterfication, a waste byproduct, glycerin is produced in vast quantities. It is well known and well understood that glycerin is a highly rich hydrogen source. Referring to FIGURE 17, the glycerin is the feed material within the material hopper and is plasma steam reformed with the ArcWhirl® torch 100, thus converting the glycerin to syngas. The syngas is scrubbed in the combined gas and water treatment unit.

The hydrogen economy is coming and the industry is in need of a small hydrogen generator. Referring to FIGURES 1 through 17, the abundance of shale gas and methane hydrates allows for rapid mobilization of the Systems, Methods and Apparatuses described herein. For example, natural gas can be cracked into hydrogen and carbon by using it as the plasma gas within the torch 100. The twin volute cyclone 200 will separate the carbon from the hydrogen, thus producing a clean stream of hydrogen. The hydrogen can be further scrubbed with a combined gas and water treatment system as shown in FIGURE 16.

The foregoing description of the basic apparatus is provided that includes: (a) a first cylindrical vessel having a first end, a second end and a first longitudinal axis; (b) a first vortex finder connected to the first end of the first cylindrical vessel and aligned with the first longitudinal axis; (c) a second cylindrical vessel having a third end, a fourth end and a second longitudinal axis; (d) a second vortex finder connected to the third end of the second cylindrical vessel and aligned with the second longitudinal axis; (e) an inlet passage disposed between the first vortex finder and the second vortex finder, connected tangentially to both the first cylindrical vessel proximate to the first end and the second cylindrical vessel proximate to the third end, and having an inlet and a third longitudinal axis; and (f) a wedge or divider disposed within the inlet passage along the third longitudinal axis. A heated gas is supplied to the inlet of the inlet passage, and the heated gas is directed into the first cylindrical vessel to form a first vortex gas flow and the second cylindrical vessel to form a second vortex gas flow using the wedge or divider. The matter is dropped into the first vortex finder or the second vortex finder or both the first vortex finder and the second vortex finder such that the matter is treated in a selected temperature range as the matter passes through a first central portion of the first vortex gas flow and exit the second end of the first cylindrical vessel and/or pass through a second central portion of the second vortex flow and exit the fourth end of the second cylindrical vessel.

The present invention's use of multiple small diameter cyclones fed from a common header provides for a compact treating plant or system that is efficient and scalable. Likewise, this configuration enables the plant to increase treatment capacity via small increments and not through the purchase of one long rotarty kiln, upgrader, gasifier or one large plasma process. The present invention allows the matter to be manufactured in a multi-stage treating process wherein addition materials can be added to, coated or reacted with the matter to produce new and improved characteristics. Moreover, the ability to use off-the-shelf and/or modified high temperature and high pressure cyclones sourced from the oil and gas industry as a component for a plasma treatment system allows for a relatively compact, modular and inexpensive plant that could be built in a timely fashion. Finally, the present invention provides a system that can be mounted on a skid and operated at or near the drilling operation which greatly reduces the cost of treating matter by saving expensive storage and transportation costs.

## Claims

1. An apparatus for treating matter comprising:
a first cylindrical vessel having a first end, a second end and a first longitudinal axis;
a first vortex finder connected to the first end of the first cylindrical vessel and aligned with the first longitudinal axis;
a second cylindrical vessel having a third end, a fourth end and a second longitudinal axis;
a second vortex finder connected to the third end of the second cylindrical vessel and aligned with the second longitudinal axis;
an inlet passage disposed between the first vortex finder and the second vortex finder, connected tangentially to both the first cylindrical vessel proximate to the first end and the second cylindrical vessel proximate to the third end, and having an inlet and a third longitudinal axis;
a divider disposed within the inlet passage along the third longitudinal axis that directs a heated gas from the inlet into the first cylindrical vessel to form a first vortex gas flow and the second cylindrical vessel to form a second vortex gas flow;
a heated gas source connected to the inlet of the inlet passage; and
a matter source connected to the first vortex finder or the second vortex finder or both the first vortex finder and the second vortex finder such that the matter drops into the first vortex finder or the second vortex finder or both the first vortex finder and the second vortex finder and is treated in a selected temperature range as the matter passes through a first central portion of the first vortex gas flow and exit the second end of the first cylindrical vessel and/or pass through a second central portion of the second vortex flow and exit the fourth end of the second cylindrical vessel.

2. A method for treating matter comprising the steps of:
providing an apparatus comprising:
a first cylindrical vessel having a first end, a second end and a first longitudinal axis,
a first vortex finder connected to the first end of the first cylindrical vessel and aligned with the first longitudinal axis,
a second cylindrical vessel having a third end, a fourth end and a second longitudinal axis,
a second vortex finder connected to the third end of the second cylindrical vessel and aligned with the second longitudinal axis,
an inlet passage disposed between the first vortex finder and the second vortex finder, connected tangentially to both the first cylindrical vessel proximate to the first end and the second cylindrical vessel proximate to the third end, and having an inlet and a third longitudinal axis, and
a divider disposed within the inlet passage along the third longitudinal axis;
supplying a heated gas from a heated gas source to the inlet of the inlet passage;
directing the heated gas into the first cylindrical vessel to form a first vortex gas flow and the second cylindrical vessel to form a second vortex gas flow using the divider; and
dropping the matter into the first vortex finder or the second vortex finder or both the first vortex finder and the second vortex finder such that the matter is treated in a selected temperature range as the matter pass through a first central portion of the first vortex gas flow and exit the second end of the first cylindrical vessel and/or pass through a second central portion of the second vortex flow and exit the fourth end of the second cylindrical vessel.

3. The apparatus or method as recited in claims 1 or 2, wherein a material is added to the first vortex gas flow or the second vortex gas flow that coats or chemically reacts with the matter.

4. The apparatus as recited in claim 1, wherein the divider is movable along the third longitudinal axis or pivotable such that first vortex gas flow is different from the second vortex gas flow.

5. The method as recited in claim 2, wherein the first vortex gas flow and the second vortex gas flow are adjusted by moving the divider along the third longitudinal axis or pivoting the divider.

6. The method as recited in claim 2, wherein the matter is partially sintered in the first cylindrical vessel and sintered in the second cylindrical vessel.

7. The apparatus or method as recited in claims 1 or 2, wherein the heated gas source comprises a high temperature blower, a high temperature compressor, an electrical heater or heated gas source, a burner, a thermal oxidizer, a jet exhaust, an oxy-fuel torch, a plasma torch, an internal combustion engine exhaust, or a combination thereof.

8. The apparatus or method as recited in claims 1 or 2, wherein the first cylindrical vessel and the second cylindrical vessel are cylinder-shaped or cone-shaped.

9. The method as recited in claim 2, wherein the selected temperature range is between 1,200°C and 3,700°C.

10. The method as recited in claim 2, wherein the selected temperature range is based on a chemical composition of the matter, a size of the matter, a resonance time of the matter within the first cylindrical vessel, the second cylindrical vessel or both.

11. The apparatus or method as recited in claims 1 or 2, wherein the heated gas source comprises:
a third cylindrical vessel having a fifth end, a sixth end and a fourth longitudinal axis;
a tangential inlet connected to or proximate to the fifth end;
a tangential outlet connected to or proximate to the sixth end;
an electrode housing connected to the sixth end of the third cylindrical vessel such that a first electrode is aligned with the fourth longitudinal axis of the third cylindrical vessel, extends into the third cylindrical vessel, and can be moved along the fourth longitudinal axis;
a linear actuator connected to the first electrode to adjust a position of the first electrode within the third cylindrical vessel along the fourth longitudinal axis of the cylindrical vessel;
a hollow electrode nozzle connected to the sixth end of the third cylindrical vessel such that a center line of the hollow electrode nozzle is aligned with the fourth longitudinal axis of the fourth cylindrical vessel; and
wherein the tangential inlet and the tangential outlet create a third vortex flow within the third cylindrical vessel, and the first electrode and the hollow electrode nozzle create a plasma that discharges through the hollow electrode nozzle and into the inlet of the inlet passageway.

12. The apparatus or method as recited in claim 11, wherein the divider comprises a second electrode.

13. The apparatus or method as recited in claim 12, wherein the divider comprises a counter current feed tube containing a material that coats or chemically reacts with the matter.

14. The apparatus or method as recited in claims 1 or 2, wherein the heated gas source comprises:
a first electrode proximate to inlet of the inlet passageway and aligned with the third longitudinal axis;
the divider comprises a second electrode; and
a power source connected to the first electrode and the second electrode.

15. The apparatus or method as recited in claim 14, wherein the first electrode or the second electrode contains a material that coats or chemically reacts with the matter.

16. The apparatus or method as recited in claims 1 or 2, wherein the heated gas source comprises:
a first electrode proximate to the inlet of the inlet passageway and aligned in a plane substantially perpendicular to the third longitudinal axis; and
a third electrode aligned longitudinally with the first electrode such that an electrical arc between the first and second electrodes intersects the third longitudinal axis.

17. The apparatus or method as recited in claims 1 or 2, wherein:
the heated gas comprises a plasma;
the first vortex gas flow comprises a first vortex plasma flow; and
the second vortex gas flow comprises a second vortex plasma flow.

18. The apparatus or method as recited in claim 17, wherein the apparatus further comprises a radio frequency source attached to or disposed within the first cylindrical vessel or the second cylindrical vessel or both, and the radio frequency source comprises one or more radio frequency coils, a waveguide, or a combination thereof.

19. The apparatus or method as recited in claims 1 or 2, wherein the apparatus further comprises:
a third vortex finder connected to the second end of the first cylindrical vessel and aligned with the first longitudinal axis;
a first tangential outlet connected to or disposed proximate to the second end of the first cylindrical vessel such that the first vortex gas flow exits the first cylindrical vessel through the first tangential outlet.

20. The apparatus or method as recited in claims 1 or 2, wherein the apparatus further comprises:
a fourth vortex finder connected to the fourth end of the second cylindrical vessel and aligned with the second longitudinal axis; and
a second tangential outlet connected to or disposed proximate to the fourth end of the second cylindrical vessel such that the second vortex gas flow exits the second cylindrical vessel through the second tangential outlet.

## Patentansprüche

1. Vorrichtung zur Behandlung von Materie, umfassend:
ein erstes zylindrisches Gefäß mit einem ersten Ende, einem zweiten Ende und einer ersten longitudinalen Achse;
einen ersten Wirbelfinder, verbunden mit dem ersten Ende des ersten zylindrischen Gefäßes und ausgerichtet an der ersten longitudinalen Achse;
ein zweites zylindrisches Gefäß mit einem dritten Ende, einem vierten Ende und einer zweiten longitudinalen Achse;
einen zweiten Wirbelfinder, verbunden mit dem dritten Ende des zweiten zylindrischen Gefäßes und ausgerichtet an der zweiten longitudinalen Achse;
eine Einlasspassage, angeordnet zwischen dem ersten Wirbelfinder und dem zweiten Wirbelfinder, tangential verbunden sowohl mit dem ersten zylindrischen Gefäß in Nachbarschaft zu dem ersten Ende als auch dem zweiten zylindrischen Gefäß in Nachbarschaft zu dem dritten Ende und aufweisend einen Einlass und eine dritte longitudinale Achse;
einen Teiler, angeordnet innerhalb der Einlasspassage entlang der dritten longitudinalen Achse, welcher ein erwärmtes Gas von dem Einlass in das erste zylindrische Gefäß, um einen ersten Wirbelgasstrom zu bilden, und das zweite zylindrische Gefäß, um einen zweiten Wirbelgasstrom zu bilden, leitet;
eine Quelle erwärmten Gases, verbunden mit dem Einlass der Einlasspassage; und
eine Materiequelle, derart mit dem ersten Wirbelfinder oder dem zweiten Wirbelfinder oder sowohl dem ersten Wirbelfinder als auch dem zweiten Wirbelfinder verbunden, dass die Materie in den ersten Wirbelfinder oder den zweiten Wirbelfinder oder sowohl den ersten Wirbelfinder als auch den zweiten Wirbelfinder fällt und in einem ausgewählten Temperaturbereich behandelt wird, während die Materie durch einen ersten zentralen Bereich des ersten Wirbelgasstroms dringt und das zweite Ende des ersten zylindrischen Gefäßes verlässt und/oder durch einen zweiten zentralen Bereich des zweiten Wirbelstroms dringt und das vierte Ende des zweiten zylindrischen Gefäßes verlässt.

2. Verfahren zur Behandlung von Materie, umfassend die Schritte:
Bereitstellen einer Vorrichtung, umfassend:
ein erstes zylindrisches Gefäß mit einem ersten Ende, einem zweiten Ende und einer ersten longitudinalen Achse,
einen ersten Wirbelfinder, verbunden mit dem ersten Ende des ersten zylindrischen Gefäßes und ausgerichtet an der ersten longitudinalen Achse,
ein zweites zylindrisches Gefäß mit einem dritten Ende, einem vierten Ende und einer zweiten longitudinalen Achse,
einen zweiten Wirbelfinder, verbunden mit dem dritten Ende des zweiten zylindrischen Gefäßes und ausgerichtet an der zweiten longitudinalen Achse,
eine Einlasspassage, angeordnet zwischen dem ersten Wirbelfinder und dem zweiten Wirbelfinder, tangential verbunden sowohl mit dem ersten zylindrischen Gefäß in Nachbarschaft zu dem ersten Ende als auch dem zweiten zylindrischen Gefäß in Nachbarschaft zu dem dritten Ende und aufweisend einen Einlass und eine dritte longitudinale Achse, und
einen Teiler, angeordnet innerhalb der Einlasspassage entlang der dritten longitudinalen Achse;
Zuführen eines erwärmten Gases von einer Quelle erwärmten Gases zu dem Einlass der Einlasspassage;
Leiten des erwärmten Gases in das erste zylindrische Gefäß, um einen ersten Wirbelgasstrom zu bilden, und das zweite zylindrische Gefäß, um einen zweiten Wirbelgasstrom zu bilden, unter Verwendung des Teilers; und
Fallenlassen der Materie in den ersten Wirbelfinder oder den zweiten Wirbelfinder oder sowohl den ersten Wirbelfinder als auch den zweiten Wirbelfinder, derart, dass die Materie in einem ausgewählten Temperaturbereich behandelt wird, während die Materie durch einen ersten zentralen Bereich des ersten Wirbelgasstroms dringt und das zweite Ende des ersten zylindrischen Gefäßes verlässt und/oder durch einen zweiten zentralen Bereich des zweiten Wirbelstroms dringt und das vierte Ende des zweiten zylindrischen Gefäßes verlässt.

3. Vorrichtung oder Verfahren nach Anspruch 1 oder 2, wobei dem ersten Wirbelgasstrom oder dem zweiten Wirbelgasstrom ein Material zugegeben wird, welches die Materie beschichtet oder mit der Materie chemisch reagiert.

4. Vorrichtung nach Anspruch 1, wobei der Teiler entlang der dritten longitudinalen Achse beweglich ist oder derart drehbar ist, dass der erste Wirbelgasstrom von dem zweiten Wirbelgasstrom verschieden ist.

5. Verfahren nach Anspruch 2, wobei der erste Wirbelgasstrom und der zweite Wirbelgasstrom durch Bewegen des Teilers entlang der dritten longitudinalen Achse oder Drehen des Teilers eingestellt werden.

6. Verfahren nach Anspruch 2, wobei die Materie in dem ersten zylindrischen Gefäß teilweise gesintert wird und in dem zweiten zylindrischen Gefäß gesintert wird.

7. Vorrichtung oder Verfahren nach Anspruch 1 oder 2, wobei die Quelle erwärmten Gases ein Hochtemperaturgebläse, einen Hochtemperaturkompressor, eine elektrische Heizung oder eine Quelle erwärmten Gases, einen Brenner, einen thermischen Oxidierer, einen Düsenauslass, einen Oxifuel-Brenner, einen Plasmabrenner, einen Verbrennungsmotor-Auspuff oder eine Kombination davon umfasst.

8. Vorrichtung oder Verfahren nach Anspruch 1 oder 2, wobei das erste zylindrische Gefäß und das zweite zylindrische Gefäß zylinderförmig oder konusförmig sind.

9. Verfahren nach Anspruch 2, wobei der ausgewählte Temperaturbereich zwischen 1200°C und 3700°C liegt.

10. Verfahren nach Anspruch 2, wobei der ausgewählte Temperaturbereich auf einer chemischen Zusammensetzung der Materie, einer Größe der Materie, einer Resonanzzeit der Materie in dem ersten zylindrischen Gefäß, dem zweiten zylindrischen Gefäß oder beiden, beruht.

11. Vorrichtung oder Verfahren nach Anspruch 1 oder 2, wobei die Quelle erwärmten Gases
ein drittes zylindrisches Gefäß mit einem fünften Ende, einem sechsten Ende und einer vierten longitudinalen Achse;
einen tangentialen Einlass, verbunden mit oder in Nachbarschaft zu dem fünften Ende;
einen tangentialen Auslass, verbunden mit oder in Nachbarschaft zu dem sechsten Ende;
ein Elektrodengehäuse, derart mit dem sechsten Ende des dritten zylindrischen Gefäßes verbunden, dass eine erste Elektrode an der vierten longitudinalen Achse des dritten zylindrischen Gefäßes ausgerichtet ist, in das dritte zylindrische Gefäß reicht und entlang der vierten longitudinalen Achse bewegt werden kann;
einen Linearaktuator, verbunden mit der ersten Elektrode zum Einstellen einer Position der ersten Elektrode in dem dritten zylindrischen Gefäß entlang der vierten longitudinalen Achse des zylindrischen Gefäßes;
eine hohle Elektrodentülle, derart mit dem sechsten Ende des dritten zylindrischen Gefäßes verbunden, dass eine Mittellinie der hohlen Elektrodentülle an der vierten longitudinalen Achse des vierten zylindrischen Gefäßes ausgerichtet ist;
umfasst und
wobei der tangentiale Einlass und der tangentiale Auslass einen dritten Wirbelstrom in dem dritten zylindrischen Gefäß erzeugen und die erste Elektrode und die hohle Elektrodentülle ein Plasma erzeugen, welches durch die hohle Elektrodentülle und in den Einlass des Einlassdurchgangs entlädt.

12. Vorrichtung oder Verfahren nach Anspruch 11, wobei der Teiler eine zweite Elektrode umfasst.

13. Vorrichtung oder Verfahren nach Anspruch 12, wobei der Teiler ein Gegenstromzufuhrrohr, enthaltend ein Material, welches die Materie beschichtet oder mit der Materie chemisch reagiert, umfasst.

14. Vorrichtung oder Verfahren nach Anspruch 1 oder 2, wobei die Quelle erwärmten Gases
eine erste Elektrode in Nachbarschaft zu dem Einlass des Einlassdurchgangs und ausgerichtet an der dritten longitudinalen Achse;
der Teiler eine zweite Elektrode umfasst; und
eine Stromquelle, verbunden mit der ersten Elektrode und der zweiten Elektrode
umfasst.

15. Vorrichtung oder Verfahren nach Anspruch 14, wobei die erste Elektrode oder die zweite Elektrode ein Material enthält, welches die Materie beschichtet oder mit der Materie chemisch reagiert.

16. Vorrichtung oder Verfahren nach Anspruch 1 oder 2, wobei die Quelle erwärmten Gases
eine erste Elektrode in Nachbarschaft zu dem Einlass des Einlassdurchgangs und angeordnet in einer im Wesentlichen zu der dritten longitudinalen Achse senkrechten Ebene; und
eine dritte Elektrode, derart an der ersten Elektrode longitudinal ausgerichtet, dass ein elektrischer Bogen zwischen den ersten und zweiten Elektroden die dritte longitudinale Achse schneidet,
umfasst.

17. Vorrichtung oder Verfahren nach Anspruch 1 oder 2, wobei:
das erwärmte Gas ein Plasma umfasst;
der erste Wirbelgasstrom einen ersten Wirbelplasmastrom umfasst; und
der zweite Wirbelgasstrom einen zweiten Wirbelplasmastrom umfasst.

18. Vorrichtung oder Verfahren nach Anspruch 17, wobei die Vorrichtung weiter eine Radiofrequenzquelle, angebracht an oder angeordnet in dem ersten zylindrischen Gefäß oder dem zweiten zylindrischen Gefäß oder beiden, umfasst und die Radiofrequenzquelle eine oder mehrere Radiofrequenzspulen, einen Wellenleiter oder eine Kombination davon umfasst.

19. Vorrichtung oder Verfahren nach Anspruch 1 oder 2, wobei die Vorrichtung weiter
einen dritten Wirbelfinder, verbunden mit dem zweiten Ende des ersten zylindrischen Gefäßes und ausgerichtet an der ersten longitudinalen Achse;
einen ersten tangentialen Auslass, derart verbunden mit oder angeordnet in Nachbarschaft zu dem zweiten Ende des ersten zylindrischen Gefäßes, dass der erste Wirbelgasstrom das erste zylindrische Gefäß durch den ersten tangentialen Auslass verlässt,
umfasst.

20. Vorrichtung oder Verfahren nach Anspruch 1 oder 2, wobei die Vorrichtung weiter
einen vierten Wirbelfinder, verbunden mit dem vierten Ende des zweiten zylindrischen Gefäßes und ausgerichtet an der zweiten longitudinalen Achse; und
einen zweiten tangentialen Auslass, derart verbunden mit oder angeordnet in Nachbarschaft zu dem vierten Ende des zweiten zylindrischen Gefäßes, dass der zweite Wirbelgasstrom das zweite zylindrische Gefäß durch den zweiten tangentialen Auslass verlässt,
umfasst.

## Revendications

1. Dispositif de traitement de matière comprenant :
une première cuve cylindrique présentant une première extrémité, une deuxième extrémité et un premier axe longitudinal ;
un premier guide de tourbillon raccordé à la première extrémité de la première cuve cylindrique et aligné avec le premier axe longitudinal ;
une deuxième cuve cylindrique présentant une troisième extrémité, une quatrième extrémité et un deuxième axe longitudinal ;
un deuxième guide de tourbillon raccordé à la troisième extrémité de la deuxième cuve cylindrique et aligné avec le deuxième axe longitudinal ;
un passage d'entrée disposé entre le premier guide de tourbillon et le deuxième guide de tourbillon, raccordé tangentiellement à la fois à la première cuve cylindrique à proximité de la première extrémité et à la deuxième cuve cylindrique à proximité de la troisième extrémité, et comportant une entrée et un troisième axe longitudinal ;
un diviseur disposé à l'intérieur du passage d'entrée le long du troisième axe longitudinal qui dirige un gaz chaud à partir depuis l'entrée vers la première cuve cylindrique afin de former un premier écoulement de gaz tourbillonnaire et la deuxième cuve cylindrique afin de former un deuxième écoulement de gaz tourbillonnaire ;
une source de gaz chaud raccordée à l'entrée du passage d'entrée ;et
une source de matière raccordée au premier guide de tourbillon ou au deuxième guide de tourbillon ou à la fois au premier guide de tourbillon et au deuxième guide de tourbillon de telle sorte que la matière tombe dans le premier guide de tourbillon ou le deuxième guide de tourbillon ou à la fois dans le premier guide de tourbillon et le deuxième guide de tourbillon et est traitée dans une plage de températures sélectionnée lorsque la matière passe à travers une première partie centrale du premier écoulement de gaz tourbillonnaire et sort par la deuxième extrémité de la première cuve cylindrique et/ou passe à travers une deuxième partie centrale du deuxième écoulement tourbillonnaire et sort par la quatrième extrémité de la deuxième cuve cylindrique.

2. Procédé de traitement de matière comprenant les étapes suivantes :
agencement d'un dispositif comprenant :
- une première cuve cylindrique présentant une première extrémité, une deuxième extrémité et un premier axe longitudinal,
- un premier guide de tourbillon raccordé à la première extrémité de la première cuve cylindrique et aligné avec le premier axe longitudinal,
- une deuxième cuve cylindrique présentant une troisième extrémité, une quatrième extrémité et un deuxième axe longitudinal,
- un deuxième guide de tourbillon raccordé à la troisième extrémité de la deuxième cuve cylindrique et aligné avec le deuxième axe longitudinal,
- un passage d'entrée disposé entre le premier guide de tourbillon et le deuxième guide de tourbillon, raccordé tangentiellement à la fois à la première cuve cylindrique à proximité de la première extrémité et à la deuxième cuve cylindrique à proximité de la troisième extrémité, et présentant une entrée et un troisième axe longitudinal, et
- un diviseur disposé à l'intérieur du passage d'entrée le long du troisième axe longitudinal ;
fourniture d'un gaz chaud à partir d'une source de gaz chaud à l'entrée du passage d'entrée ;
guidage du gaz chaud dans la première cuve cylindrique afin de former un premier écoulement de gaz tourbillonnaire et dans la deuxième cuve cylindrique afin de former un deuxième écoulement de gaz tourbillonnaire en employant le diviseur ; et
dépôt de la matière dans le premier guide de tourbillon ou le deuxième guide de tourbillon ou à la fois dans le premier guide de tourbillon et le deuxième guide de tourbillon, de telle sorte que la matière est traitée dans une plage de températures sélectionnée lorsque la matière passe à travers une première partie centrale du premier écoulement de gaz tourbillonnaire et sort par la deuxième extrémité de la première cuve cylindrique et/ou passe à travers une deuxième partie centrale du deuxième écoulement tourbillonnaire et sort par la quatrième extrémité de la deuxième cuve cylindrique.

3. Dispositif ou procédé selon les revendications 1 ou 2, dans lequel un matériau est ajouté au premier écoulement de gaz tourbillonnaire ou au deuxième écoulement de gaz tourbillonnaire qui enrobe la matière ou réagit chimiquement avec elle.

4. Dispositif selon la revendication 1, dans lequel le diviseur peut être déplacé le long du troisième axe longitudinal ou amené à pivoter de telle sorte que le premier écoulement de gaz tourbillonnaire est différent du second écoulement de gaz tourbillonnaire.

5. Procédé selon la revendication 2, dans lequel le premier écoulement de gaz tourbillonnaire et le second écoulement de gaz tourbillonnaire sont ajustés en déplaçant le diviseur le long du troisième axe longitudinal ou en faisant pivoter le diviseur.

6. Procédé selon la revendication 2, dans lequel la matière est partiellement agglomérée dans la première cuve cylindrique et agglomérée dans la deuxième cuve cylindrique.

7. Dispositif ou procédé selon les revendications 1 ou 2, dans lequel la source de gaz chaud comprend un souffleur à haute température, un compresseur à haute température, un élément de chauffage électrique ou une source de gaz chaud, un brûleur, un dispositif d'oxydation thermique, un échappement de tuyère, une torche à oxy-carburant, une torche à plasma, un échappement de moteur à combustion interne, ou une association de ceux-ci.

8. Dispositif ou procédé selon les revendications 1 ou 2, dans lequel la première cuve cylindrique et la deuxième cuve cylindrique sont de forme cylindrique ou conique.

9. Procédé selon la revendication 2, dans lequel la plage de températures sélectionnée est comprise entre 1.200° C et 3.700° C.

10. Procédé selon la revendication 2, dans lequel la plage de températures sélectionnée est basée sur une composition chimique de la matière, une taille de la matière, une durée de résonance de la matière à l'intérieur de la première cuve cylindrique, la deuxième cuve cylindrique ou des deux.

11. Dispositif ou procédé selon les revendications 1 ou 2, dans lequel la source de gaz chaud comprend :
une troisième cuve cylindrique présentant une cinquième extrémité, une sixième extrémité et un quatrième axe longitudinal ;
une entrée tangentielle reliée à la cinquième extrémité ou à proximité de celle-ci ;
une sortie tangentielle reliée à la sixième extrémité ou à proximité de celle-ci ;
un boîtier d'électrode, relié à la sixième extrémité de la troisième cuve cylindrique de telle sorte qu'une première électrode est alignée avec le quatrième axe longitudinal de la troisième cuve cylindrique, s'étend dans la troisième cuve cylindrique, et peut être déplacé suivant le quatrième axe longitudinal ;
un actionneur linéaire raccordé à la première électrode afin d'ajuster une position de la première électrode à l'intérieur de la troisième cuve cylindrique le long du quatrième axe longitudinal de la cuve cylindrique ;
un injecteur d'électrode creuse raccordé à la sixième extrémité de la troisième cuve cylindrique de telle sorte qu'une ligne d'axe de l'injecteur d'électrode creuse est alignée avec le quatrième axe longitudinal de la quatrième cuve cylindrique ; et
dans lequel l'entrée tangentielle et la sortie tangentielle créent un troisième écoulement tourbillonnaire à l'intérieur de la troisième cuve cylindrique, et la première électrode et l'injecteur d'électrode creuse créent un plasma qui se décharge à travers l'injecteur d'électrode creuse et à l'entrée du passage d'entrée.

12. Dispositif ou procédé selon la revendication 11, dans lequel le diviseur comprend une deuxième électrode.

13. Dispositif ou procédé selon la revendication 12, dans lequel le diviseur comprend un tube d'alimentation à contre-courant contenant un matériau qui enrobe la matière ou réagit chimiquement avec elle.

14. Dispositif ou procédé selon les revendications 1 ou 2, dans lequel la source de gaz chaud comprend :
une première électrode à proximité de l'entrée du passage d'entrée et alignée avec le troisième axe longitudinal ;
le diviseur comprend une deuxième électrode ; et
une source de puissance raccordée à la première électrode et la deuxième électrode.

15. Dispositif ou procédé selon la revendication 14, dans lequel la première électrode ou la deuxième électrode contient un matériau qui enrobe la matière ou réagit chimiquement avec elle.

16. Dispositif ou procédé selon les revendications 1 ou 2, dans lequel la source de gaz chaud comprend :
une première électrode à proximité de l'entrée du passage d'entrée et alignée dans un plan sensiblement perpendiculaire au troisième axe longitudinal ; et
une troisième électrode alignée longitudinalement avec la première électrode de telle sorte qu'un arc électrique entre les première et deuxième électrodes coupe le troisième axe longitudinal.

17. Dispositif ou procédé selon les revendications 1 ou 2, dans lequel :
le gaz chaud comprend un plasma ;
le premier écoulement de gaz tourbillonnaire comprend un premier écoulement de plasma tourbillonnaire ; et le deuxième écoulement de gaz tourbillonnaire comprend un deuxième écoulement de plasma tourbillonnaire.

18. Dispositif ou procédé selon la revendication 17, dans lequel le dispositif comprend en outre une source de radio-fréquence fixée ou disposée à l'intérieur de la première cuve cylindrique ou de la deuxième cuve cylindrique ou des deux, et la source de radio-fréquence comprend un ou plusieurs enroulements à radio-fréquence, un guide d'ondes ou une association de ceux-ci.

19. Dispositif ou procédé selon les revendications 1 ou 2, dans lequel le dispositif comprend en outre :
un troisième guide de tourbillon raccordé à la deuxième extrémité de la première cuve cylindrique et aligné avec le premier axe longitudinal ;
une première sortie tangentielle raccordée à la deuxième extrémité de la première cuve cylindrique ou disposée à proximité de celle-ci, de telle sorte que le premier écoulement de gaz tourbillonnaire sort de la première cuve cylindrique par la première sortie tangentielle.

20. Dispositif ou procédé selon la revendication 1 ou 2, dans lequel le dispositif comprend en outre :
un quatrième guide de tourbillon raccordé à la quatrième extrémité de la deuxième cuve cylindrique et aligné avec le deuxième axe longitudinal ; et
une seconde sortie tangentielle raccordée à la quatrième extrémité de la deuxième cuve cylindrique ou disposée à proximité de celle-ci, de telle sorte que le deuxième écoulement de gaz tourbillonnaire sort de la deuxième cuve cylindrique par la seconde sortie tangentielle.
